# EUROPÄISCHE PATENTSCHRIFT

(11) **EP 0 892 249 B1**
(45) Veröffentlichungstag und Bekanntmachung des Hinweises auf die Patenterteilung: **14.08.2002**
(21) Anmeldenummer: 98110899.6
(22) Anmeldetag: 15.06.1998
(51) Int. Cl.: G01D 3/02

(54) **Messanordnung**
Measuring arrangement
Dispositif de mesure

(30) Priorität: 14.07.1997 DE 19730158
(43) Veröffentlichungstag der Anmeldung: 20.01.1999
(73) Patentinhaber: Endress + Hauser GmbH + Co.KG., 79689 Maulburg (DE)
(72) Erfinder: Lalla, Robert, Dr., 79541 Lörrach (DE)

(56) Entgegenhaltungen:
- EP-A- 0 324 067
- GB-A- 2 065 890
- US-A- 4 818 994

## Beschreibung

Die Erfindung betrifft eine Meßanordnung mit
- einer Sensor-Baugruppe, die wenigstens einen Sensor zur Erfassung einer physikalischen Meßgröße und für jeden Sensor einen Analog-Digital-Wandler zur Digitalisierung des vom Sensor gelieferten analogen Meßsignals sowie einen nichtflüchtigen Digitalspeicher enthält, in dem sensorspezifische Kenndaten gespeichert sind, und
- einer Auswerte-Baugruppe, die durch eine digitale Schnittstelle mit der Sensor-Baugruppe verbunden ist und Einrichtungen zur digitalen Verarbeitung der von der Sensor-Baugruppe gelieferten digitalisierten Meßdaten, Ausgabeeinrichtungen für die verarbeiteten Meßdaten und Stromversorgungseinrichtungen enthält.

Meßanordnungen dieser Art ermöglichen es, die Sensorsignale in der Sensor-Baugruppe möglichst nahe am Sensor zu digitalisieren und die weitere Verarbeitung, wie Kompensation und Umsetzung der Meßergebnisse in eine für die Ausgabe geeignete Form, in der von der Sensor-Baugruppe getrennten Auswerte-Baugruppe vorzunehmen. Dadurch erhöht sich die Störfestigkeit und Signalstabilität der Meßanordnung. Die Speicherung von exemplarabhängigen Sensorkenndaten, wie Empfindlichkeit und Temperaturkoeffizient, in einem nichtflüchtigen Digitalspeicher direkt am Sensor erleichtert es dem Hersteller, durch Bereithaltung vorgefertigter abgeglichener Sensor- und Auswerte-Baugruppen für eine Vielzahl von Meßbereichen und Zulassungsoptionen die Lieferzeiten kurzzuhalten. Darüber hinaus können Reparaturen oder Meßbereich-Umrüstungen beim Anwender ohne erneute Werkskalibration schnell durchgeführt werden.

Bei den bekannten Meßanordnungen dieser Art (z.B. US-A-4 818 994) dient als Schnittstelle zwischen der Sensor-Baugruppe und der Auswerte-Baugruppe üblicherweise ein vom Mikrocontroller der Auswerte-Baugruppe gesteuerter bidirektionaler serieller Peripheriebus. Der Mikrocontroller adressiert über diesen Bus Komponenten der Sensor-Baugruppe, wie die Analog-Digital-Wandler und den nichtflüchtigen Digitalspeicher, konfiguriert die Sensor-Baugruppe, liest den Speicherinhalt aus und ruft die Meßwerte ab. Der hierfür benötigte Programmcode ist in der Auswerte-Baugruppe gespeichert, ebenso wie die benötigten Konfigurationsdaten. Ein Austausch der Sensor-Baugruppe macht daher in der Regel auch Änderungen in der Auswerte-Baugruppe erforderlich.

Bei Meßanordnungen der angegebenen Art besteht gewöhnlich die Forderung, daß alle Anschlußleitungen für Stromversorgung, Meßsignalübertragung, Kommunikation usw. potentialfrei gegenüber dem Gehäuse ausgelegt sind. Für minimale Störeinkopplung am Sensor und für die Erfüllung bestimmter Sicherheitsbestimmungen wäre es dagegen vorteilhaft, den Sensor direkt mit dem Gehäuse zu verbinden. Diese beiden einander widersprechenden Forderungen könnten durch eine spannungsfeste galvanische Trennung zwischen Sensor-Baugruppe und Auswerte-Baugruppe erfüllt werden. Die bei den bekannten Meßanordnungen erforderlichen bidirektionalen seriellen Schnittstellen eignen sich jedoch nicht oder nur mit ganz erheblichem Aufwand für eine galvanische Trennung.

Aufgabe der Erfindung ist die Schaffung einer Meßanordnung der vorstehend angegebenen Art, die einen einfachen Austausch der Sensor-Baugruppe ohne Änderung der AuswerteBaugruppe ermöglicht und bei der eine spannungsfreie galvanische Trennung zwischen Sensor-Baugruppe und Auswerte-Baugruppe auf einfache Weise und mit geringem Aufwand möglich ist.

Nach der Erfindung wird diese Aufgabe dadurch gelöst, daß
- die digitale Schnittstelle eine unidirektionale serielle Schnittstelle ist, die zur Übertragung von digitalen Daten von der Sensor-Baugruppe zur Auswerte-Baugruppe ausgebildet ist,
- der nichtflüchtige Digitalspeicher in der Sensor-Baugruppe Konfigurationsdaten zur Initialisierung der Sensor-Baugruppe sowie Programmcode und Koeffizienten für die Verarbeitung der digitalisierten Meßdaten in der Auswerte-Baugruppe enthält und
- die Sensor-Baugruppe eine Steuerschaltung enthält, die
   - unmittelbar nach dem Einschalten der Sensor-Baugruppe das Auslesen der im nichtflüchtigen Digitalspeicher gespeicherten Daten, die Initialisierung der Sensor-Baugruppe durch die ausgelesenen Konfigurationsdaten und die Übertragung des ausgelesenen Speicherinhalts über die serielle Schnittstelle zur Auswerte-Baugruppe veranlaßt und
   - nach Abschluß der Übertragung des Speicherinhalts in regelmäßigen Zeitintervallen unaufgefordert die Übertragung jeweils eines die digitalisierten Meßdaten enthaltenden Datenblocks über die serielle Schnittstelle zur Auswerte-Baugruppe veranlaßt.

Bei der erfindungsgemäßen Meßanordnung sind alle sensorspezifischen Daten einschließlich der Konfigurationsdaten und des für die Meßdatenverarbeitung erforderlichen Programmcodes in der Sensor-Baugruppe gespeichert. Somit muß die in der Auswerte-Baugruppe enthaltene Datenverarbeitungsschaltung den Sensortyp und dessen individuelle Korrektur-Algorithmen nicht kennen. Dadurch besteht die Möglichkeit, mit einer einheitlichen Auswertebaugruppe ganz verschiedene Sensortypen zu betreiben.

Die Initialisierung der Sensor-Baugruppe erfolgt ohne Einwirken der Auswerte-Baugruppe aufgrund der in der Sensor-Baugruppe gespeicherten Konfigurationsdaten. Desgleichen werden die für die Datenverarbeitung in der Auswerte-Baugruppe benötigten sensorspezifischen Daten sowie der hierfür erforderliche Programmcode und im weiteren Verlauf die zu verarbeitenden Meßdaten ohne Anforderung durch die Auswerte-Baugruppe von der Sensor-Baugruppe zur Auswerte-Baugruppe übertragen, so daß Datenübertragungen ausschließlich in der Richtung von der Sensor-Baugruppe zu der Auswerte-Baugruppe erfolgen. Deshalb ist die digitale Schnittstelle zwischen den beiden Baugruppen eine unidirektionale serielle Schnittstelle, die auf einfache Weise eine galvanische Trennung erlaubt. In der Gegenrichtung erfolgt nur die Stromversorgung der Sensor-Baugruppe aus der Auswerte-Baugruppe sowie gegebenenfalls die Übertragung eines Taktsignals; diese einseitigen Verbindungen lassen sich ebenfalls leicht galvanisch trennen.

Vorteilhafte Ausgestaltungen und Weiterbildungen der erfindungsgemäßen Meßanordnung sind in den Unteransprüchen gekennzeichnet.

Weitere Vorteile und Merkmale der Erfindung ergeben sich aus der folgenden Beschreibung von Ausführungsbeispielen der Erfindung anhand der Zeichnung. In der Zeichnung zeigen:
- Fig. 1: das Blockschaltbild einer erfindungsgemäßen Meßanordnung und
- Fig. 2: eine abgeänderte Ausführungsform eines Teils der Anordnung von Fig. 1.

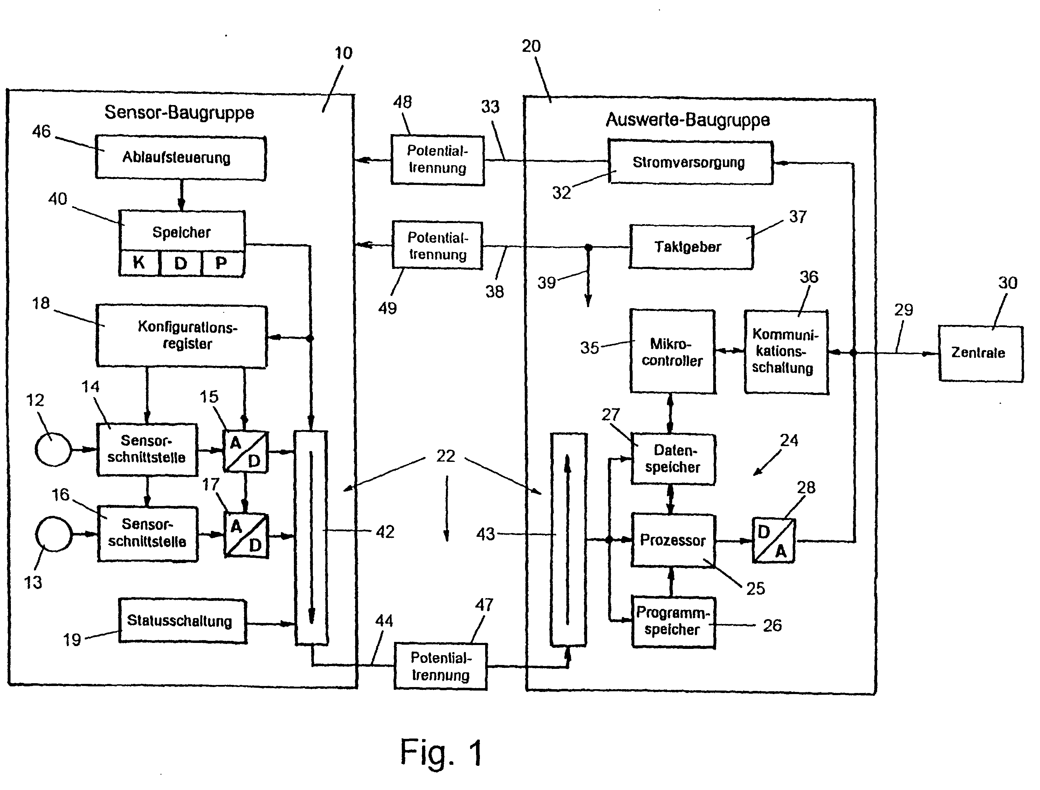

Die in Fig. 1 der Zeichnung dargestellte Meßanordnung enthält eine Sensor-Baugruppe 10, die zur Erfassung von physikalischen Meßgrößen dient. Sie enthält zu diesem Zweck für jede zu erfassende Meßgröße einen Sensor, der ein analoges elektrisches Ausgangssignal liefert, das von dem Wert der erfaßten Meßgröße abhängig ist. Als Beispiel ist der Fall eines Drucktransmitters dargestellt, der einen Drucksensor 12 und einen Temperatursensor 13 enthält, da üblicherweise auch die Temperatur des Drucksensors gemessen und beispielsweise zur Kompensation und/oder zur Kalibration verwendet wird. Das analoge Ausgangssignal des Drucksensors 12 wird über eine Sensor-Schnittstellenschaltung 14, die zur Anpassung des Sensors dient, einem Analog-Digital-Wandler 15 zugeführt, in dem es digitalisiert wird. In gleicher Weise wird das analoge Ausgangssignal des Temperatursensors 13 über eine Sensor-Schnittstellenschaltung 16 einem Analog-Digital-Wandler 17 zugeführt und in diesem digitalisiert. Die Analog-Digital-Wandler 15 und 17 liefern an ihren Ausgängen digitalisierte Meßdaten, die den erfaßten Druck bzw. die erfaßte Temperatur angeben. Die Sensor-Anpassung durch die Sensor-Schnittstellenschaltungen 14, 16 und die Digitalisierung der Meßdaten in den Analog-Digital-Wandlern 15 und 17 erfolgt in Abhängigkeit von sensorspezifischen Konfigurationsdaten, die in Konfigurationsregistern 18 stehen. Ferner enthält die Sensor-Baugruppe 10 eine Statusschaltung 19, die ein digitales Statussignal abgibt, das den jeweiligen Status der Sensor-Baugruppe anzeigt.

Die Meßanordnung enthält ferner eine Auswerte-Baugruppe 20, in der die von der Sensor-Baugruppe 10 gelieferten digitalisierten Meßdaten verarbeitet werden. Die Auswerte-Baugruppe 20 kann von der Sensor-Baugruppe räumlich getrennt sein und ist mit dieser über eine Schnittstelle 22 verbunden, über die die digitalisierten Meßdaten und das digitale Statussignal von der Sensor-Baugruppe 10 zur Auswerte-Baugruppe 20 übertragen werden. Die Auswerte-Baugruppe enthält eine Datenverarbeitungseinrichtung 24 mit einem Prozessor 25, einem Programmspeicher 26 und einem Datenspeicher 27. Die Datenverarbeitung dient zur Korrektur der Meßdaten in Abhängigkeit von den Eigenschaften der verwendeten individuellen Sensoren. Die verarbeiteten Meßdaten können beispielsweise in herkömmlicher Weise durch einen Digital-Analog-Wandler 28 in ein analoges Meßsignal umgewandelt werden, das über eine Zweidrahtleitung 29 zu einer Zentrale 30 übertragen wird, in der das Meßergebnis angezeigt oder auf andere Weise verwertet wird. Das analoge Meßsignal kann gemäß einer üblichen Norm beispielsweise ein zwischen 4 und 20 mA veränderlicher Strom sein.

Die Auswerte-Baugruppe 20 enthält ferner eine Stromversorgungsschaltung 32, die die für den Betrieb der Meßanordnung erforderliche Energie über die Zweidrahtleitung 29 bezieht und die Stromversorgung aller Schaltungen der Auswerte-Baugruppe 20 sowie über eine Versorgungsleitung 33 auch die Stromversorgung der Sensor-Baugruppe 10 bewirkt. Ferner kann die Auswerte-Baugruppe 20 einen Mikrocontroller 35 für die Bedienung der Meßanordnung enthalten, der über eine Kommunikationsschaltung 36 mit der Zentrale 30 in Verbindung steht und den Inhalt des Datenspeichers 27 modifizieren kann. Die Kommunikation zwischen der Zentrale 30 und dem Mikrocontroller 35 kann beispielsweise durch impulsförmige Kommunikationssignale erfolgen, die dem analogen Meßsignal auf der Zweidrahtleitung 29 überlagert werden.

Schließlich enthält die Auswerte-Baugruppe einen Taktgeber 37, der den Arbeitstakt der verschiedenen Funktionsschaltungen der Auswerte-Baugruppe 20 und über eine Taktleitung 38 auch den Arbeitstakt der verschiedenen Funktionsschaltungen der Sensor-Baugruppe 10 bestimmt. Die Verbindungen zwischen dem Taktgeber 37 und den verschiedenen taktgesteuerten Schaltungen der Auswerte-Baugruppe 20 sind nicht im einzelnen dargestellt, sondern nur durch den Pfeil 39 angedeutet.

Die Sensor-Baugruppe 10 enthält einen nichtflüchtigen Digitalspeicher 40, in dem werkseitig nach der Fertigstellung der Sensor-Baugruppe alle sensorspezifischen Daten gespeichert worden sind, die für die Erfassung der Meßdaten in der Sensor-Baugruppe 10 und für die Verarbeitung der Meßdaten in der Auswerte-Baugruppe 20 erforderlich sind. Hierzu gehören die Konfigurationsdaten K, die in den Konfigurationsregistern 18 benötigt werden, Sensorkenndaten D, die für die Verarbeitung der Meßdaten in der Auswerte-Baugruppe 20 benötigt werden, und insbesondere der Programmcode P, mit dem die Meßdaten der individuellen Sensoren durch die Datenverarbeitung in der Datenverarbeitungseinrichtung 24 der Auswerte-Baugruppe 20 korrigiert werden sollen.

Die Sensorkenndaten D und der Programmcode P, die in der Auswerte-Baugruppe 20 benötigt werden, werden ebenfalls über die Schnittstelle 22 von der Sensor-Baugruppe 10 zu der Auswerte-Baugruppe 20 übertragen. Die Schnittstelle 22 ist eine unidirektionale serielle Schnittstelle, zu der ein Parallel-Serien-Umsetzer 42 in der Sensor-Baugruppe 10, ein Serien-Parallel-Umsetzer 43 in der Auswerte-Baugruppe 20 und eine die beiden Umsetzer 42 und 43 verbindende einfache Leitung 44 gehören.

Eine in der Sensor-Baugruppe 10 enthaltene Ablaufsteuerschaltung 46 steuert die Funktionen der beschriebenen Meßanordnung in der folgenden Weise:

Bei der Inbetriebnahme der Meßanordnung, die beispielsweise durch das Einschalten der Stromversorgung bestimmt wird, veranlaßt die Ablaufsteuerschaltung 46 zunächst das Auslesen des Inhalts des Digitalspeichers 40, ohne daß es hierzu einer Anforderung durch die Auswerte-Baugruppe 20 bedarf. Die Konfigurationsdaten K werden in die Konfigurationsregister 18 eingegeben, während die Sensorkenndaten D und der Programmcode P über die serielle Schnittstelle 22 zu der Auswerte-Baugruppe 20 übertragen werden, wo die Sensorkenndaten D im Datenspeicher 27 und der Programmcode P im Programmspeicher 26 abgelegt werden. Die Übertragung von Meßdaten über die serielle Schnittstelle 22 ist während dieser Vorgänge gesperrt. Durch die Eingabe der Konfigurationsdaten K in die Konfigurationsregister 18 wird die Sensor-Baugruppe 10 initialisiert.

Nach Abschluß der Übertragung des Speicherinhalts veranlaßt die Ablaufsteuerschaltung 46, wiederum ohne Anforderung durch die Auswerte-Baugruppe 20, daß in regelmäßigen Zeitabständen über die serielle Schnittstelle 22 jeweils ein Datensatz übertragen wird, der die digitalisierten Meßdaten der Sensoren 12 und 13 enthält. Diese Meßdaten werden in der Auswerte-Baugruppe 20 in den Prozessor 25 eingegeben und unter Berücksichtigung der im Datenspeicher 27 gespeicherten Sensorkenndaten durch den im Programmspeicher 26 gespeicherten Programmcode korrigiert. Die korrigierten Meßdaten werden dann im Digital-Analog-Wandler 28 in ein analoges Meßsignal umgesetzt, das über die Zweidrahtleitung 29 zur Zentrale 30 übertragen wird. Jeder Datensatz kann mit einem Start-Bit beginnen und mit einem Stop-Bit enden. Die Verarbeitung der Meßdaten in der Auswerte-Baugruppe 20 wird jeweils durch die Übertragung eines Datensatzes ausgelöst.

Eine vorteilhafte Ausgestaltung der Meßanordnung ergibt sich aus der Tatsache, daß Daten über die unidirektionale Schnittstelle 22 nur in einer Richtung, nämlich von der Sensor-Baugruppe 10 zur Auswerte-Baugruppe 20, übertragen werden. Dadurch ist auf einfache Weise eine spannungsfeste galvanische Trennung zwischen der Sensor-Baugruppe 10 einerseits und der Auswerte-Baugruppe 20 und den damit verbundenen Schaltungen andererseits möglich. Für eine vollständige galvanische Trennung muß jede Verbindung zwischen der Sensor-Baugruppe 10 und der Auswerte-Baugruppe 20 eine Potentialtrennung aufweisen. Daher ist in der in Fig. 1 dargestellten Meßanordnung in die Leitung 44 der unidirektionalen seriellen Schnittstelle 22 eine Potentialtrennung 47 eingefügt, in die Versorgungsleitung 33 eine Potentialtrennung 48 und in die Taktleitung 38 eine Potentialtrennung 49. Die in die Versorgungsleitung 33 eingefügte Potentialtrennung 48 kann durch einen Gleichspannungswandler gebildet sein, der einen Transformator enthält. Die in die Signalübertragungsleitungen 44 und 38 eingefügten Potentialtrennungen 47 bzw. 49 können durch induktive oder kapazitive Übertrager gebildet sein; da jedoch jede dieser Signalübertragungsleitungen Signale nur in einer Richtung überträgt, kann jede der Potentialtrennungen 47 und 49 auch durch einen Optokoppler gebildet sein. Durch die galvanische Trennung ist es möglich, die Sensoren 12 und 13 in der Sensor-Baugruppe 10 direkt an das Massepotential des Gehäuses zu legen, während alle nach außen führenden Anschlußleitungen der Auswerte-Baugruppe 20 potentialfrei gegenüber dem Gehäuse ausgelegt sein können.

Wenn die Sensor-Baugruppe 10 gegen eine andere Sensor-Baugruppe ausgetauscht wird, enthält die neue Sensor-Baugruppe alle für ihre Initialisierung erforderlichen Konfigurationsdaten sowie alle für die Verarbeitung der Meßdaten in der Auswerte-Baugruppe 20 benötigten Sensorkenndaten und den zugehörigen Programmcode in ihrem Digitalspeicher 40. Der Austausch kann daher am Einbauort erfolgen, ohne daß irgendwelche Änderungen an der Auswerte-Baugruppe erforderlich sind. Desgleichen können Reparaturen oder Meßbereichs-Umrüstungen am Einbauort ohne erneute Werkskalibration vorgenommen werden.

Es sind natürlich verschiedene Abänderungen der beschriebenen Meßanordnung möglich. Anstatt die korrigierten Meßdaten in dem Digital-Analog-Wandler 28 in ein analoges Meßsignal umzuwandeln, das über die Leitung 29 zu der Zentrale 30 übertragen wird, kann auch vorgesehen werden, daß der Mikrocontroller 35 die korrigierten Meßdaten in digitale Meßsignale umsetzt, die über die Kommunikationsschaltung 36 und die Leitung 29 zu der Zentrale 30 übertragen werden. Ferner kann der Mikrocontroller 35, falls er durch einen entsprechend leistungsfähigen Mikrocomputer gebildet ist, auch die Funktionen der von dem Prozessor 25, dem Programmspeicher 26 und dem Datenspeicher 27 gebildeten Datenverarbeitungseinrichtung 24 mit übernehmen, also die Speicherung der Sensorkenndaten und des Programmcodes, die beim Einschalten über die serielle Schnittstelle 22 übertragen werden, und die Korrektur der danach über die serielle Schnittstelle 22 übertragenen digitalisierten Meßdaten.

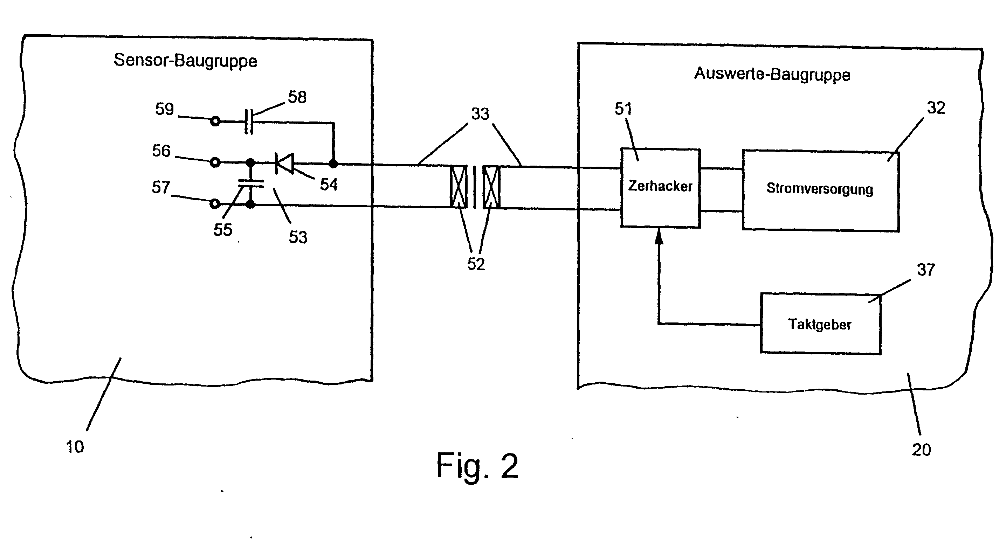

Anstatt den Betriebstakt für die Sensor-Baugruppe 10 durch eine eigene Taktleitung 38 zu übertragen, ist es auch möglich, diesen Betriebstakt aus der Potentialtrennung 48 abzuleiten, die in die Versorgungsleitung 33 eingefügt ist. In Fig. 2 ist ein Ausführungsbeispiel dargestellt, bei dem die Potentialtrennung 48 durch einen Gleichspannungswandler gebildet ist. Fig. 2 zeigt einen Abschnitt der Sensor-Baugruppe 10 und einen Abschnitt der Auswerte-Baugruppe 20 mit der Stromversorgung 32 und dem Taktgeber 37. Der Gleichspannungswandler enthält einen Zerhacker 51, der die von der Stromversorgung 32 gelieferte Gleichspannung empfängt, einen an den Ausgang des Zerhackers 51 angeschlossenen Transformator 52 und eine an die Sekundärwicklung des Transformators 52 angeschlossene Gleichrichterschaltung 53 mit einem Gleichrichter 54 und einem Siebkondensator 55. Der Zerhacker 51 ist in der Auswerte-Baugruppe 20 angeordnet, die Gleichrichterschaltung 53 ist in der Sensor-Baugruppe 10 angeordnet und der Transformator 52 ist zur Potentialtrennung in die Versorgungsleitung 33 eingefügt, die den Zerhacker 51 mit der Gleichrichterschaltung 53 verbindet. Der Takteingang des Zerhackers 51 empfängt das vom Taktgeber 37 gelieferte Taktsignal. Der Zerhacker 51 erzeugt aus der von der Stromversorgung 32 gelieferten Gleichspannung eine Rechteck-Wechselspannung, deren Frequenz durch den Taktgeber 37 bestimmt ist. Diese Rechteck-Wechselspannung wird über den Transformator 52 übertragen und durch die Gleichrichterschaltung 53 in die Versorgungs-Gleichspannnung der Sensor-Baugruppe 10 umgewandelt, die an den Ausgangsklemmen 56 und 57 der Gleichrichterschaltung 53 zur Verfügung steht. Aus der über den Transformator 52 übertragenen Rechteck-Wechselspannung wird vor der Gleichrichtung der Betriebstakt für die Sensor-Baugruppe 10 abgeleitet, beispielsweise mittels eines zwischen der Sekundärwicklung des Transformators 52 und der Gleichrichterschaltung 53 angeschlossenen Kondensators 58, der aus der vom Transformator 52 übertragenen Rechteck-Wechselspannung ein Taktsignal bildet, das an der Klemme 59 zur Verfügung steht. Der Betriebstakt der Sensor-Baugruppe 10 ist somit durch den Taktgeber 37 bestimmt.

Es ist auch möglich, in der Sensor-Baugruppe 10 einen eigenen Taktgeber vorzusehen, der einen von dem Taktgeber 37 der Auswerte-Baugruppe 20 unabhängigen Betriebstakt für die Sensor-Baugruppe 10 liefert. In diesem Fall muß die unidirektionale serielle Schnittstelle 22 eine asynchrone Schnittstelle sein. Wenn dagegen der Betriebstakt der Sensor-Baugruppe 10 in einer der zuvor beschriebenen Weisen durch den Taktgeber 37 der Auswerte-Baugruppe 20 bestimmt wird, spielt es keine Rolle, ob die unidirektionale serielle Schnittstelle eine synchrone oder eine asynchrone Schnittstelle ist.

## Patentansprüche

1. Meßanordnung mit
- einer Sensor-Baugruppe, die wenigstens einen Sensor zur Erfassung einer physikalischen Meßgröße und für jeden Sensor einen Analog-Digital-Wandler zur Digitalisierung des vom Sensor gelieferten analogen Meßsignals sowie einen nichtflüchtigen Digitalspeicher enthält, in dem sensorspezifische Kenndaten gespeichert sind, und
- einer Auswerte-Baugruppe, die durch eine digitale Schnittstelle mit der Sensor-Baugruppe verbunden ist und Einrichtungen zur digitalen Verarbeitung der von der Sensor-Baugruppe gelieferten digitalisierten Meßdaten, Ausgabeeinrichtungen für die verarbeiteten Meßdaten und Stromversorgungseinrichtungen enthält,
**dadurch gekennzeichnet, daß**
- die digitale Schnittstelle eine unidirektionale serielle Schnittstelle ist, die zur Übertragung von digitalen Daten von der Sensor-Baugruppe zur Auswerte-Baugruppe ausgebildet ist,
- der nichtflüchtige Digitalspeicher in der Sensor-Baugruppe Konfigurationsdaten zur Initialisierung der Sensor-Baugruppe sowie Programmcode und Koeffizienten für die Verarbeitung der digitalisierten Meßdaten in der Auswerte-Baugruppe enthält und
- die Sensor-Baugruppe eine Steuerschaltung enthält, die
- unmittelbar nach dem Einschalten der Sensor-Baugruppe das Auslesen der im nichtflüchtigen Digitalspeicher gespeicherten Daten, die Initialisierung der Sensor-Baugruppe durch die ausgelesenen Konfigurationsdaten und die Übertragung des ausgelesenen Speicherinhalts über die serielle Schnittstelle zur Auswerte-Baugruppe veranlaßt und
- - nach Abschluß der Übertragung des Speicherinhalts in regelmäßigen Zeitintervallen unaufgefordert die Übertragung jeweils eines die digitalisierten Meßdaten enthaltenden Datensatzes über die serielle Schnittstelle zur Auswerte-Baugruppe veranlaßt.

2. Meßanordnung nach Anspruch 1, **dadurch gekennzeichnet, daß** die Auswerte-Baugruppe eine Stromversorgungsschaltung enthält und daß die elektrische Versorgungsleistung für den Betrieb der Sensor-Baugruppe von der Stromversorgungsschaltung über eine Versorgungsleitung zu der Sensor-Baugruppe übertragen wird.

3. Meßanordnung nach Anspruch 1 oder 2, **dadurch gekennzeichnet, daß** die Auswerte-Baugruppe einen Taktgeber enthält, dessen Taktsignal über eine Taktleitung zu der Sensor-Baugruppe übertragen wird.

4. Meßanordnung nach einem der vorhergehenden Ansprüche, **dadurch gekennzeichnet, daß** in jede Verbindung zwischen der Sensor-Baugruppe und der Auswerte-Baugruppe eine Potentialtrennung eingefügt ist.

5. Meßanordnung nach Anspruch 4, **dadurch gekennzeichnet, daß** die in eine Signalleitung eingefügte Potentialtrennung durch einen induktiven oder kapazitiven Übertrager gebildet ist.

6. Meßanordnung nach Anspruch 4, **dadurch gekennzeichnet, daß** die in eine Signalleitung eingefügte Potentialtrennung durch einen Optokoppler gebildet ist.

7. Meßanordnung nach Anspruch 4, **dadurch gekennzeichnet, daß** die in eine Versorgungsleitung eingefügte Potentialtrennung durch einen Transformator gebildet ist.

8. Meßanordnung nach einem der Ansprüche 4 bis 7, **dadurch gekennzeichnet, daß** die Schaltungen der Sensor-Baugruppe mit Gehäusepotential verbunden sind.

9. Meßanordnung nach Anspruch 2, **dadurch gekennzeichnet, daß** die Auswerte-Baugruppe einen Taktgeber enthält und daß der Betriebstakt der Sensor-Baugruppe über die Versorgungsleitung aus dem vom Taktgeber gelieferten Taktsignal abgeleitet wird.

10. Meßanordnung nach Anspruch 9, **dadurch gekennzeichnet, daß** die Stromversorgung der Sensor-Baugruppe durch die Stromversorgung der Auswerte-Baugruppe über einen Gleichspannungswandler erfolgt, der einen in der Auswerte-Baugruppe angeordneten, durch das Taktsignal des Taktgebers gesteuerten Zerhacker, eine in der Sensor-Baugruppe angeordnete Gleichrichterschaltung und einen zur Potentialtrennung in die Versorgungsleitung zwischen dem Zerhacker und der Gleichrichterschaltung eingefügten Transformator aufweist, und daß in der Sensor-Baugruppe der Betriebstakt aus der vom Transformator zur Gleichrichterschaltung gelieferten Wechselspannung abgeleitet wird.

11. Meßanordnung nach Anspruch 1 oder 2, **dadurch gekennzeichnet, daß** die Sensor-Baugruppe und die Auswerte-Baugruppe jeweils einen eigenen Taktgeber zur Lieferung ihres Betriebstaktes enthalten und daß die unidirektionale serielle Schnittstelle eine asynchrone Schnittstelle ist.

12. Meßanordnung nach einem der vorhergehenden Ansprüche, **dadurch gekennzeichnet, daß** die Auswerte-Baugruppe eine Datenverarbeitungseinrichtung enthält und daß die Verarbeitung der in jedem Datensatz enthaltenen Meßdaten in der Datenverarbeitungseinrichtung durch die Übertragung des Datensatzes ausgelöst wird.

13. Meßanordnung nach Anspruch 12, **dadurch gekennzeichnet, daß** jeder Datensatz mit einem Start-Bit beginnt und mit einem Stop-Bit endet.

14. Meßanordnung nach Anspruch 12 oder 13, **dadurch gekennzeichnet, daß** die Datenverarbeitungsanordnung einen Prozessor, einen Programmspeicher und einen Datenspeicher enthält und daß die in der Sensor-Baugruppe enthaltene Steuerschaltung die Übertragung des im nichtflüchtigen Digitalspeicher enthaltenen Programmcodes in den Programmspeicher und die Übertragung der im nichtflüchtigen Digitalspeicher enthaltenen Sensorkenndaten in den Datenspeicher veranlaßt.

## Claims

1. A measuring arrangement comprising
- a sensor assembly containing at least one sensor for determining a measurable physical variable and, for each sensor, an analogue-digital converter for digitising the analogue measuring signal supplied by the sensor, and a non-volatile digital memory in which sensor-specific characteristic data are stored, and
- an evaluation assembly connected to the sensor assembly by means of a digital interface and containing devices for digitally processing the digitised measuring data supplied by the sensor assembly, output devices for the processed measuring data and power supply devices,
**characterised in that**
- the digital interface is a unidirectional serial interface designed for transmitting digital data from the sensor assembly to the evaluation assembly,
- the non-volatile digital memory in the sensor assembly contains configuration data for initialising the sensor assembly, and a program code and coefficients for processing the digitised measuring data in the evaluation assembly, and
- the sensor assembly contains a control circuit which
- immediately after the sensor assembly has been switched on, induces the read-out of the data stored in the non-volatile digital memory, the initialisation of the sensor assembly on the basis of the read-out configuration data and the transmission of the read-out memory contents to the evaluation assembly via the serial interface, and
- on termination of the transmission of the memory contents, induces, at regular time intervals and unprompted, the transmission of a respective data set, containing the digitised measuring data, to the evaluation assembly via the serial interface.

2. A measuring arrangement according to claim 1, **characterised in that** the evaluation assembly contains a power supply circuit and **in that** the electrical power supply for operating the sensor assembly is transmitted from the power supply circuit to the sensor assembly via a supply line.

3. A measuring arrangement according to claim 1 or 2, **characterised in that** the evaluation assembly contains a clock generator, the clock signal from which is transmitted to the sensor assembly via a clock line.

4. A measuring arrangement according to any one of the preceding claims, **characterised in that** a potential isolator is inserted into each connection between the sensor assembly and the evaluation assembly.

5. A measuring arrangement according to claim 4, **characterised in that** the potential isolator inserted into a signal line is formed by an inductive or capacitive transmitter.

6. A measuring arrangement according to claim 4, **characterised in that** the potential isolator inserted into a signal line is formed by an optical coupler.

7. A measuring arrangement according to claim 4, **characterised in that** the potential isolator inserted into a supply line is formed by a transformer.

8. A measuring arrangement according to any one of claims 4 to 7, **characterised in that** the circuits of the sensor assembly are connected to the casing potential.

9. A measuring arrangement according to claim 2, **characterised in that** the evaluation assembly contains a clock generator and **in that** the operating cycle of the sensor assembly is derived from the clock signal, supplied by the clock generator, via the supply line.

10. A measuring arrangement according to claim 9, **characterised in that** the sensor assembly is supplied with power by the power supply of the evaluation assembly via a d.c. voltage transformer comprising a chopper arranged in the evaluation assembly and controlled by the clock signal of the clock generator, a rectifier circuit arranged in the sensor assembly, and a transformer inserted into the supply line between the chopper and the rectifier circuit for potential isolation, and **in that**, in the sensor assembly, the operating cycle is derived from the a.c. voltage supplied to the rectifier circuit by the transformer.

11. A measuring arrangement according to claim 1 or 2, **characterised in that** the sensor assembly and the evaluation assembly each contain a separate clock generator for supplying its operating cycle, and **in that** the unidirectional serial interface is an asynchronous interface.

12. A measuring arrangement according to any one of the preceding claims, **characterised in that** the evaluation assembly contains a data processing device and **in that** the processing of the measuring data contained in each data set is triggered in the data processing device by the transmission of the data set.

13. A measuring arrangement according to claim 12, **characterised in that** each data set begins with a start bit and ends with a stop bit.

14. A measuring arrangement according to claim 12 or 13, **characterised in that** the data processing arrangement contains a processor, a program memory and a data memory, and **in that** the control circuit contained in the sensor assembly induces the transmission of the program code, contained in the non-volatile digital memory, to the program memory and the transmission of the sensor characteristic data, contained in the non-volatile digital memory, to the data memory.

## Revendications

1. Dispositif de mesure comprenant
- un sous-groupe capteur qui renferme au moins un capteur destiné à capter une grandeur physique mesurée et, pour chaque capteur, un convertisseur analogique-numérique destiné à numériser le signal de mesure analogique fourni par le capteur, ainsi qu'une mémoire numérique non volatile dans laquelle sont numérisées des données caractéristiques spécifiques au capteur, et
- un sous-groupe d'analyse qui est relié au sous-groupe capteur par une interface numérique, et qui comprend des dispositifs pour le traitement numérique des données de mesure numérisées fournies par le sous-groupe capteur, des dispositifs de sortie pour les données de mesure traitées et des dispositifs d'alimentation électrique,
**caractérisé en ce que**
- l'interface numérique est une interface série unidirectionnelle qui est conçue pour la transmission de données numériques du sous-groupe capteur au sous-groupe d'analyse,
- la mémoire numérique non volatile contenue dans le sous groupe capteur comprend des données de configuration pour l'initialisation du sous-groupe capteur ainsi que des codes de programme et des coefficients pour le traitement des données de mesure numérisées dans le sous-groupe d'analyse et
- le sous-groupe capteur comprend un circuit de commande qui provoque,
- immédiatement après la mise sous tension du sous-groupe capteur, la lecture des données mémorisées dans la mémoire numérique non volatile, l'initialisation du sous-groupe capteur par les données de configuration lues, et la transmission du contenu de la mémoire lue au sous-groupe d'analyse, à travers l'interface série, et qui provoque,
- après l'exécution de la transmission du contenu de la mémoire, pendant des intervalles de temps réguliers et spontanément, la transmission à chaque fois d'un jeu de données qui contient une des données de mesure numérisées au sous-groupe d'analyse, à travers l'interface série.

2. Dispositif de mesure selon la revendication 1, **caractérisé en ce que** le sous-groupe d'analyse comprend un circuit d'alimentation électrique et **en ce que** la puissance d'alimentation électrique pour le fonctionnement du sous-groupe capteur est transmise du circuit d'alimentation électrique au sous-groupe capteur par une ligne d'alimentation.

3. Dispositif de mesure selon la revendication 1 ou 2, **caractérisé en ce que** le sous-groupe d'analyse comprend un générateur de rythme dont le signal de rythme est transmis au sous-groupe capteur par une ligne de rythme.

4. Dispositif de mesure selon une des revendications précédentes, **caractérisé en ce qu'**une coupure de potentiel est intercalée dans chaque liaison entre le sous-groupe capteur et le sous-groupe d'analyse.

5. Dispositif de mesure selon la revendication 4, **caractérisé en ce que** la coupure de potentiel intercalée dans une ligne de signaux est formée par un organe de transmission inductif ou capacitif.

6. Dispositif de mesure selon la revendication 4, **caractérisé en ce que** la coupure de potentiel intercalée dans une ligne de signaux est formée par un optocoupleur.

7. Dispositif de mesure selon la revendication 4, **caractérisé en ce que** la coupure de potentiel intercalée dans une ligne d'alimentation est constituée par un transformateur.

8. Dispositif de mesure selon une des revendications 4 à 7, **caractérisé en ce que** les circuits du sous-groupe capteur sont connectés au potentiel du boîtier.

9. Dispositif de mesure selon la revendication 2, **caractérisé en ce que** le sous-groupe d'analyse comprend un générateur de rythme et **en ce que** le rythme de travail du sous-groupe capteur est dérivé, à travers la ligne d'alimentation, du signal de rythme fourni par le générateur de rythme.

10. Dispositif de mesure selon la revendication 9, **caractérisé en ce que** l'alimentation électrique du sous-groupe capteur est assurée par l'alimentation électrique du sous-groupe d'analyse à travers un convertisseur de tension continue qui présente un hacheur disposé dans le sous-groupe d'analyse, commandé par le signal de rythme du générateur de rythme, un circuit redresseur disposé dans le sous-groupe capteur, et un transformateur intercalé dans la ligne d'alimentation, entre le hacheur et le circuit redresseur, pour la coupure de potentiel, et **en ce que**, dans le sous-groupe capteur, le rythme de fonctionnement est dérivé de la tension alternative fournie au circuit redresseur par le transformateur.

11. Dispositif de mesure selon la revendication 1 ou 2, **caractérisé en ce que** le sous-groupe capteur et le sous-groupe d'analyse contiennent chacun un générateur de rythme propre pour la fourniture de leur rythme de travail et **en ce que** l'interface série unidirectionnelle est une interface asynchrone.

12. Dispositif de mesure selon une des revendications précédentes, **caractérisé en ce que** le sous-groupe d'analyse renferme un dispositif de traitement des données et **en ce que** le traitement des données de mesure contenues dans chaque jeu de données est déclenché dans le dispositif de traitement des données par la transmission du jeu de données.

13. Dispositif de mesure selon la revendication 12, **caractérisé en ce que** chaque jeu de données commence par un bit de départ et se termine par un bit d'arrêt.

14. Dispositif de mesure selon la revendication 12 ou 13, **caractérisé en ce que** le dispositif de traitement des données renferme un processeur, une mémoire de programme, et une mémoire de données, et **en ce que** le circuit de commande contenu dans le sous-groupe capteur assure la transmission du code de mémoire contenu dans la mémoire numérique non volatile à la mémoire de programme et la transmission des données caractéristiques du capteur contenues dans la mémoire numérique non volatile à la mémoire des données.
